Europäisches Patentamt

European Patent Office

Office européen des brevets

(19)

(11) EP 0 744 030 B1

(12) **EUROPÄISCHE PATENTSCHRIFT**

(45) Veröffentlichungstag und Bekanntmachung des Hinweises auf die Patenterteilung:
**14.06.2000 Patentblatt 2000/24**

(21) Anmeldenummer: **95909697.5**

(22) Anmeldetag: **09.02.1995**

(51) Int. Cl.$^7$: **G01P 1/07**

(86) Internationale Anmeldenummer:
**PCT/EP95/00469**

(87) Internationale Veröffentlichungsnummer:
**WO 95/22061 (17.08.1995 Gazette 1995/35)**

(54) **VORRICHTUNG UND VERFAHREN ZUR ÜBERWACHUNG DER LAUFZEIT VON TRANSPORTGÜTERN**

DEVICE AND METHOD FOR MONITORING THE TRANSIT TIME OF TRANSPORTED ARTICLES

DISPOSITIF ET PROCEDE POUR LE CONTROLE DU TEMPS DE TANSIT D'ARTICLES TRANSPORTES

(84) Benannte Vertragsstaaten:
**BE DE DK FR GB IT NL**

(30) Priorität: **10.02.1994 DE 4404195**

(43) Veröffentlichungstag der Anmeldung:
**27.11.1996 Patentblatt 1996/48**

(73) Patentinhaber:
**SIEMENS AKTIENGESELLSCHAFT**
**80333 München (DE)**

(72) Erfinder: **ROMPE, André**
**D-10315 Berlin (DE)**

(56) Entgegenhaltungen:
**DE-A- 3 643 203          DE-A- 4 110 891**

• **PATENT ABSTRACTS OF JAPAN vol. 9 no. 44 (P-337) ,23.Februar 1985 & JP,A,59 183372 (SUMITOMO KINZOKU KOGYO KK) 18.Oktober 1984,**

**Beschreibung**

Die vorliegende Erfindung bezieht sich auf das Gebiet der Überwachung der Laufzeit von Transportgütern.

Es ist üblich, zur Kontrolle der Laufzeit von Postsendungen sogenannte Laufzeitprüfgeräte einzusetzen, die mit den zu transportierenden Postsendungen aufgegeben werden und Vorrichtungen aufweisen, durch die der Bewegungsablauf der Postsendungen registriert wird. Die bereits bekannten Vorrichtungen dieser Art beinhalten einen Bewegungssensor, der über die gesamte Versandzeit der Sendung die Bewegung registriert. Beim Transport auftretende Kräfte wirken dabei auf den Sensor ein, dessen Meßwerte in einem Bewegungs-Zeit-Diagramm festgehalten werden. Ist die Sendung in Ruhe, d. h. es erfolgt kein Transport, erfolgt auch keine Aufzeichnung. Mit solchen Vorrichtungen kann festgestellt werden, ob die Sendung z.B. nach mehrstündigem Transport mehrere Tage in unzulässiger Weise in völliger Ruhe gelegen hat.

Das durch das Laufzeitprüfgerät aufgezeichnete Bewegungs-Zeit-Diagramm kann in einer zentralen stelle ausgewertet werden, und durch einen Soll/Ist-Vergleich ist es möglich, eventuelle Stops in der Auslieferung oder Versendung zu lokalisieren, da die Transportwege und Transportzeiten für den Regelfall bekannt sind. Bereits bekannt ist auch ein Laufzeit- überwachungsgerät, das einen Speicher zum Erfassen der Meßwerte und eine Auswerteelektronik aufweist, wobei der Bewegungssensor, der Speicher für die Meßwerte und die Auswerteelektronik auf einer teilflexiblen Unterlage angeordnet sind und in der Dicke, der üblichen Briefdicke, 5 mm entspricht. Dieses Laufzeitüberwachungsgerät ist so ausgebildet, daß es in Briefsortiermaschinen verarbeitet werden kann und bei der Steifigkeitsmessung in den Briefbearbeitungmaschinen in den Postämtern nicht ausgesondert wird.

**Aus der Druckschrift Markt und Technik Nr. 10 vom 9. März 1979, S. 60-62 ist ein Verfahren und eine Vorrichtung zur Überwachung der Stoßbelastung von Transportgütern mit einem ßeschleunigungssensor, dessen Meßwerte gespeichert einer Auswerteeinrichtung zugeführt verden, bekannt. Dabei erfolgt eine Integration der Signale der drei Komponenten x,y und z. Die integrierten Werte werden in einem Speicher abgelegt. Die Hilfswerte werden digitalisiert.**

Die bekannten Vorrichtungen weisen den Nachteil auf, daß sie nur eine Detektion der Zustände der Bewegung und der Ruhe ermöglichen, jedoch keine genauere Unterscheidung der bei einem Bewegungszustand tatsächlich auftretenden Bewegungsart bzw. des verwendeten Transportmittels zulassen.

Der Erfindung liegt die Aufgabe zugrunde, eine Vorrichtung und ein Verfahren zur Überwachung der Laufzeit von Transportgütern zu schaffen, mit denen eine Identifizierung der während der Versandzeit auftretenden Transportmittel, Transportereignisse und Bewegungsarten erfolgen kann.

Diese Aufgabe wird erfindungsgemäß durch die Merkmale der Patentansprüche 1,2 und 14 gelöst. Vorteilhafte Ausführungsformen der Erfindung sind der Beschreibung und den Unteransprüchen zu entnehmen.

Gemäß einer bevorzugten Ausführungsform der Erfindung werden bei einer Überwachungseinrichtung mit einem Bewegungssensor, dessen Meßwerte gespeichert und einer Auswerteeinrichtung zugeführt werden, mit je einer vorgegebenen Zyklusdauer T Meßwerte des Sensors digitalisiert und eine vorgegebene Anzahl k von Frequenzspektren aus einer vorgegebenen Anzahl von jeweils N Meßwerten ermittelt, worauf eine Integration der k Frequenzspektren derart erfolgt, daß am Ende jeder Zyklusdauer T genau M integrierte Spekrallinien vorliegen und die integrierten Spektrallinien in einem Speicher abgelegt werden.

Die Erfindung ist auch realisierbar unter Verwendung eines schmalbandigen Bandpaßfilters zur Ermittlung der Frequenzspektren.

Die Erfindung ermöglicht insbesondere eine energie- und speicherplatzsparende Auswertung der Meßwerte des Sensors.

Eine Anpassung der Empfindlichkeit des Verfahrens an die Bewegungsenergie wird dadurch ermöglicht, daß die Anzahl k der Frequenzspektren über die integriert wird, mit zunehmender Bewegungsenergie vermindert wird.

Bei einer bevorzugten Ausführungsform der Erfindung erfolgt die Berechnung der integrierten Spektrallinien nur, wenn die Bewegungsenergie größer als eine vorgegebene minimale Bewegungsenergie $S_m$ ist, wodurch besonders energiesparend verfahren werden kann.

Ein besonderes einfaches Maß für die Bewegungsenergie ist die Summe der Beträge der Abstände von benachbarten Meßwerten oder die Streuung benachbarter Meßwerte in einem vorgegebenen Meßintervall.

Mit einer nichtlinearen Kompression der integrierten Spekrallinien wird eine weitere Reduktion des Speicherbedarfs erreicht.

Eine Adaption des Wertes der minimalen Bewegungsenergie bei konstanter Empfindlichkeit wird durch eine parametrische Adaption erreicht.

Eine optimale zeitliche Ausnutzung der zur Verfügung stehenden Batterie-Energie wird dadurch erreicht, daß die Anzahl k der Frequenzspektren über die integriert wird und die Zyklusdauer T in Abhängigkeit von der unter der Last des Bewegungssensors gemessenen Versorgungsspannung der verwendeten Testeinrichtung gesteuert werden.

Um einen insbesondere bei tiefen Temperaturen möglichen Kapazitätsverlust der zur Energieversorgung verwendeten Batterie zu berücksichtigen, wird bei Unterschreitung eines vorgegebenen Wertes der Versorgungsspannung der Bewegungssensor deaktiviert und erst dann, wenn die Versorgungsspannung einen zweiten vorgegebenen Wert angenommen hat, wieder aktiviert.

Nachfolgend wird die Erfindung beispielhaft anhand von Zeichnungen dargestellt.

Fig. 1   zeigt das integrierte Intensitätsspektrum einer Briefkastenleerungsfahrt, eines Straßentransports, eines Flugs und einer Zustellung,

Fig. 2   zeigt ein Ablaufdiagramm der intensitätsabhängigen Berechnung von integrierten Frequenzspektren

Fig. 3   zeigt eine Darstellung verschiedener Sensorzyklen in Abhängigkeit von der Intensität

Fig. 4   zeigt den Spannungsverlauf bei automatischer Leistungsaufnahmekontrolle,

Fig. 5   zeigt die zum Spannungsverlauf von Fig. 4 zugehörigen Zustandsübergänge.

In einer bevorzugten Ausführungsform der Erfindung besteht die Vorrichtung aus einem Beschleunigungssensor, einem Microcontroller mit integriertem Analog/Digital-Wandler und einem Speicher, insbesondere einem RAM. Damit die Vorrichtung in Briefsortiermaschinen verarbeitet und bei der Steifigkeitsmessung in den Briefbearbeitungsmaschinen in den Postämtern nicht ausgesondert wird, ist es vorteilhaft, sie im Format eines C6-Standardbriefes auszubilden. Der Bewegungssensor gibt ein der Beschleunigung proportionales Sensorsignal aus, das vom Analog/Digital-Wandler (ADU) digitalisiert wird. Im Microcontroller erfolgt eine Weiterverarbeitung des Signals durch eine Fouriertransformation zu Frequenzspektren, die in komprimierter Form im Speicher abgelegt werden. Nach Abschluß der Meßwertaufnahme, werden die gespeicherten Spektren ausgelesen und ausgewertet. Dabei erfolgt eine zeitliche Zuordnung der Frequenzspektren zum zeitlichen Verlauf der Bewegung der Vorrichtung während des Transports. Da die verschiedenen Transportmedien, wie zum Beispiel Kfz, Bahn, Fußtransport, Flug jeweils charakteristische Spektrenverläufe zeigen, ist eine Identifizierung des zeitlichen Ablaufs des Transportprozesses möglich.

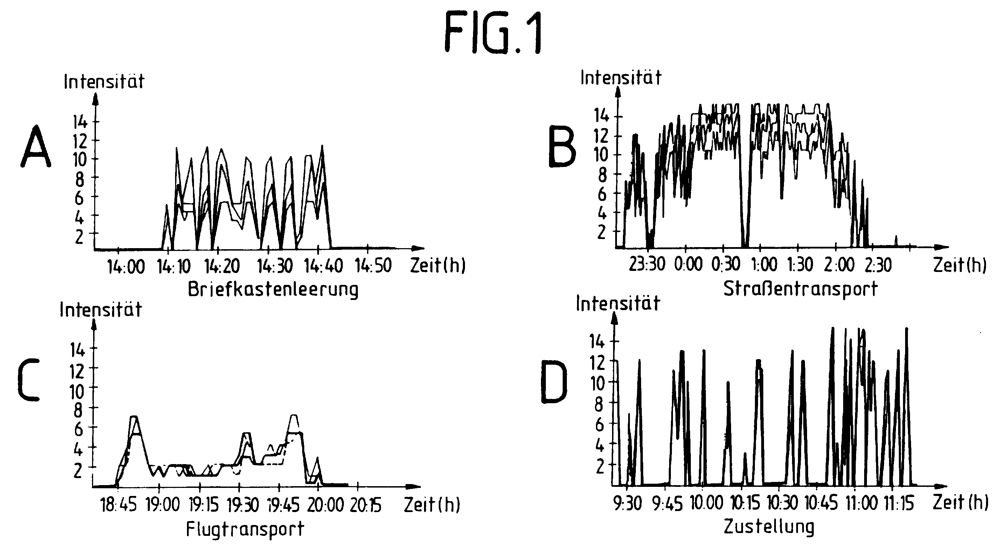

Fig. 1 zeigt für vier Transporttypen Briefkastenleerungsfahrt, Straßentransport, Flug und Zustellung charakteristische Intensitätsspektren. Neben einer Identifizierung des Transportmediums bzw. des Transporttyps, ermöglichen die Spektren auch eine Identifizierung der jeweils auftretenden Transportereignisse, wie zum Beispiel Abfahrt, Ankunft, Geschwindigkeitsänderungen usw., da diese sich in bestimmten Schwingungscharakteristiken des Transportmittels, die von der erfindungsgemäßen Vorrichtung aufgenommen werden, widerspiegeln. Besonders vorteilhaft hat sich die Verwendung von integrierten Spektren mit Frequenzen von 8, 16, 24 und 32 Hz erwiesen.

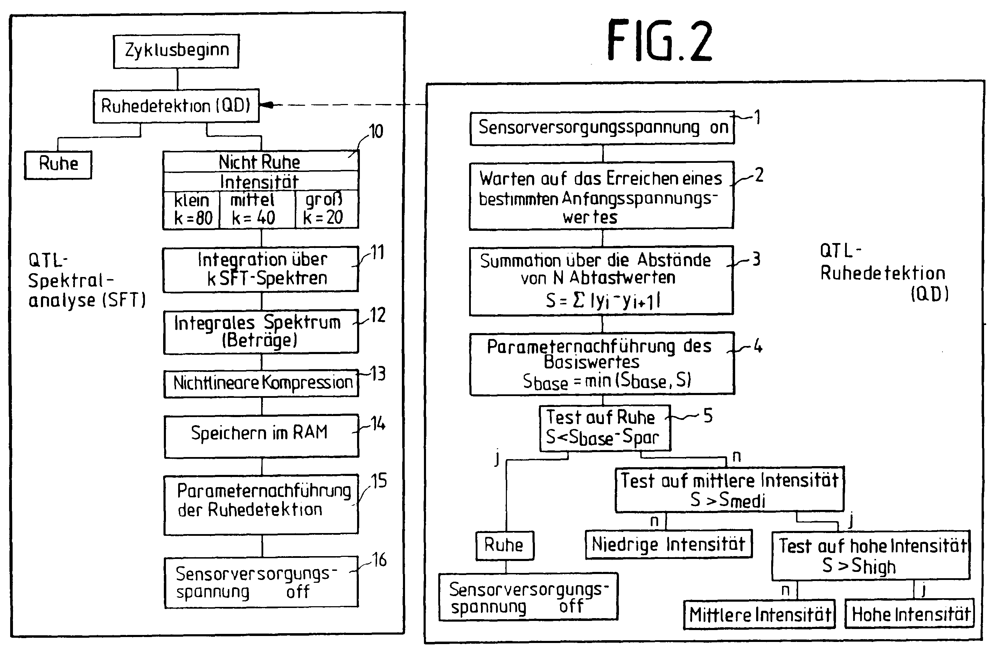

Im folgenden wird eine Ausführungsform des erfindungsgemäßen Verfahrens im einzelnen erläutert. Gemäß dem Ablaufdiagramm in Fig. 2 arbeitet das Verfahren zyklisch, z. B. mit Zykluszeiten von T = 60 sec. Nach Zyklusbeginn erfolgt zunächst eine Detektion auf einen Ruhezustand. Bei einem Brieflauf über mehrere Tage hat der Ruhezustand einen erheblichen Anteil an der Gesamtlaufzeit und kann zwischen 50 und 95 Prozent betragen. Daher kommt seiner Erkennung eine besondere Bedeutung zu. Die Ruhe-Detektion kann grundsätzlich auch mit Hilfe einer Auswertung der Spektralfunktionen erfolgen, jedoch hat eine Detektion mit einem separaten Detektionsverfahren oder einem separaten Ruhedetektor den Vorteil einer größeren Schnelligkeit und u. U. höhere Empfindlichkeit und damit eines relativ zur Empfindlichkeit geringeren Energiebedarfs.

Zu Beginn des Zyklus wird die Versorgungsspannung des Sensors eingeschaltet und auf das Erreichen eines vorgegebenen Anfangsspannungswertes des Sensors gewartet. Damit wird berücksichtigt, daß der Sensor nach einer Exponentialfunktion mit einer charakteristischen Einschwingzeit $\tau_s$ einschwingt. Als Einschwingzeit des Sensors ist z. B. die Zeit zu wählen, die nach Anlegung der Sensorversorgungsspannung vorgeht, bis die Sensorausgangsspannung auf 1/2 LSB (Least Significant Bit) des stationären Endwertes eingeschwungen ist. Im vorderen Teil der Einschwingkurve erfolgt die Ruhedetektion. Die Ruhedetektion soll möglichst mit großer Empfindlichkeit erfolgen, damit auch bei niedrigen Bewegungsintensitäten der Bewegungszustand sicher erkannt werden kann. Andererseits ist in diesem Bereich die Berechnung von Spektralfunktionen nicht erforderlich. Daher wird für die Ruhedetektion die Gesamtenergie des Sensorsignals ausgenutzt. Maße für die gesamte Energie sind die Streuung (Quadrat der Standardabweichung) des Sensorsignals in einem definierten Meßintervall oder auch die Krümmung, d. h. die Summe der Beträge der Abstände von benachbarten Meßwerten in einem definierten Meßintervall. Bei letzterem Maß wird verwendet, daß die Krümmung der Einschwingkurve vom Grad der Schwingungsanregung des Sensors abhängig ist.

In dem Ablaufdiagramm gemäß Fig. 2 erfolgt eine Summation über Abstände von N Abtastwerten.

$$S = \sum_{i=1}^{N} |y_i - y_{i+1}|$$

Ein Ruhezustand wird dann vermutet, wenn gilt

$$S < S_{TH}(N)$$

Empfindlichkeit der Bewegungsdetektion ist davon abhängig, wie nahe $S_{TH}(N)$ an S (Ruhe), den absoluten Ruhekrümmungswert, herankommt.

Nachdem eine Ruhedetektion im vorderen Teil der Einschwingkurve des Sensors stattgefunden hat, erfolgt die Berechnung der Spektralfunktion im dahinterliegenden Teil, so daß nachdem der Ruhedetektor auf "Bewegung" erkannt hat, die Spektren im selben Sensorzyklus bestimmt werden. In diesem Fall müssen der Ruhedetektor und die Berechnung der Spektralfunktion so aufeinander abgestimmt sein, daß ein vom Ruhedetektor erkannter Bewegungszustand als ein von 0 verschiedenes Spektrum bestätigt wird. Eine stabile Funktion des Ruhedetektors bei hoher Empfindlichkeit kann durch eine automatische Parameteradaption von $S_{TH}(N)$ erreicht werden. Hierzu wird $S_{TH}(N)$ in zwei Terme zerlegt

$$S_{TH}(N) = S_{base} + S_{par}.$$

$S_{base}$ ist der adaptierte Basiswert der Schwelle $S_{TH}(N)$, während $S_{par}$ der konstantparametrische Anteil ist, der die Empfindlichkeit der Bewegungsdetektion bestimmt. Die Adaption des Basiswerts $S_{base}$ erfolgt nach jeder Berechnung der Krümmung S durch Bestimmung des Minimums aus dem bisherigen $S_{base}$ und dem aktuellen Krümmungswert S.

$$S_{base} = \min(S_{base}, S)$$

Mit dieser Parameteradaption wird ereicht, daß der Basiswert der Schwelle $S_{TH}(N)$ stets optimal am Ruhekrümmungswert gehalten wird. Die Konsistenz zwischen Ruhedetektion und Berechnung der integrierten wird dadurch gewährleistet, daß für den Fall, daß die integrierten Spektren sämtlich eine Intensität 0 ergeben, nachdem die Ruhedetektion auf Bewegung erkannt hat, der Basiswert der Schwelle um 1 erhöht wird. Dieser Fall kann auch eintreten, wenn der Basiswert der Schwelle $S_{base}$ nach unten weggedriftet ist oder wenn eine kurzzeitige Bewegung nur während der Ruhedetektion stattfindet und während des späteren Meßzeitraums für die Spektrenberechnung keine Bewegung erfolgt. Wird im letzteren Fall der Basiswert irrtümlich angehoben, erfolgt bei der Ruhedetektion im folgenden Zyklus und der zugehörigen Parameternachführung eine Korrektur.

Nach Berechnung des Energiemaßes S und der Parameternachführung des Basiswertes $S_{base}$ erfolgt der Test auf Ruhe 5. Bei positivem Ergebnis dieses Tests (j) wird die Sensorversorgungsspannung abgeschaltet. Im negativem Fall (N) erfolgt ein Test auf mittlere Intensität, $S > S_{medi}$, wobei $S_{medi}$ ein vorgegebener Wert ist, der eine mittlere Bewegungsenergie charakterisiert. Bei einem negativen Ergebnis dieses Tests (N) erfolgt eine Integration über eine vorgegebene bei niedriger Intensität charakteristische Anzahl von Spektren. Bei positivem Ergebnis dieses Tests, (j) erfolgt anschließend ein Test auf hohe Intensität, $S > S_{high}$; bei negativem Ergebnis dieses Tests erfolgt eine Klassifizierung der Bewegung als mittelintensiv, bei positivem Ergebnis (j) erfolgt eine Klassifizierung auf hohe Intensität.

Je nachdem, ob eine Klassifizierung der Intensität als klein, mittel oder groß erfolgt ist, wird über eine große, eine mittlere oder eine kleine Anzahl von Spektren integriert. Die Integration über K Spektren über jeweils N Abtastwerte des Sensorsignals entspricht einer Mittelung über K Spektren und reduziert die Wirkung von statistischen Schwankungen. Da der Einfluß solcher Schwankungen bei geringen Intensitäten höher ist bzw. sich bei zunehmender Intensität vermindert, kann die Zahl kumulierter Spektren mit zunehmender Intensität vermindert werden. Für kleine Intensitäten ist die bevorzugte Anzahl von Spektren über die integriert wird K = 80, für mittlere K = 40, und für große K = 20.

Da es sich bei den Meßwerten um zeitlich diskrete Signale handelt, wird bevorzugt mit dem Formalismus der diskreten Fouriertransformation gearbeitet und die Integration 11 als Akkumulation ausgeführt. Aus dem Formalismus der diskreten Fouriertransformation folgt, daß für den bevorzugten Fall von vier Spektrallinien F1, F2, F3, F4 immer jeweils aus Real- und Imaginärteil bestehen $F_m = Re_m + Im_m$, mit m = 1,..., 4. Die Real- und Imaginärteile $Re_m$ und $Im_m$ der Spektrallinien werden dann aus aufeinanderfolgenden Abtastwerten $f_0, f_1,...,f_7$ wie folgt dargestellt:

$$Re_1 = F(f_0 - f_4) + F \cos(\pi/4)(f_1 + f_7 - f_3 - f_5)$$

$$Im_1 = F(f_2 - f_6) + F \cos(\pi/4)(f_1 + f_3 - f_5 - f_7)$$

$$Re_2 = F(f_0 - f_2 + f_4 - f_6)$$

$$Im_2 = F(f_1 + f_5 - f_3 - f_7)$$

$$Re_3 = F(f_0-f_4)+F \cos(\pi/4)(f_3+f_5-f_1-f_7)$$

$$Im_3 = F(f_6-f_2)+F \cos(\pi/4)(f_1+f_3-f_5-f_7)$$

$$Re_4 = F(f_0+f_2+f_4+f_6-f_1-f_3-f_5-f_7)$$

$$Im_4 = 0$$

Hierbei ist F ein Faktor, der geeignet zu wählen ist, um die Rundungsfehler zu minimieren (F ≈ 16).

Die spektrale Integration 11 wird durch eine Summierung der individuellen Spektralanteile von $|F_m|_i$ über jeweils K Spektren ausgeführt.

$$SF_m = \sum_{i=1}^{k} |F_m|_i$$

Hierbei ist es vorteilhaft, die Betragsbildung in einer Aproximation vorzunehmen, die ohne quadrieren und radizieren auskommt.

$$|F_m|=max(|Re_m|,|Im_m|)$$

Der Dynamikbereich der Intensitäten ist in der Größenordnung von $10^5$. Daher ist es vorteilhaft zur Reduzierung des für die Speicherung der Spektren erforderlichen Speicherbedarfs die integralen Spektrallinien einer nichtlinearen Kompression 13 zu unterwerfen und damit den Dynamikbereich um eine Größenordnung auf $2^4$ zu reduzieren. Dies ermöglicht eine Zusammenfassung von je zwei Spektrallinien zu einem Byte im Speicher. Bei einer bevorzugten Ausführungsform wird die Kompression über einen Tablelook ausgeführt. Dabei werden die Werte für die Kompressionstabelle nach einer Potenzfunktion

$$g(n)=AW*b^n$$

bestimmt. Die Kompressionstabelle ergibt sich damit zu

| n | g(n) |
|---|------|
| n | g(n) |
| 0 | $AW*b^0$ |
| 1 | $AW*b^1$ |
| 2 | $AW*b^2$ |
| ... | ... |
| 14 | $AW*b^{14}$ |

Hierbei ist AW der niederwertigste Tabelleneintrag, der die untere Grenzempfindlichkeit des Systems bestimmt. Der höchstwertigste Tabelleneintrag hat den Betrag $AW \cdot B^{14}$. Die Dynamik der Kompressionstabelle wird durch B bestimmt und kann aus AW und $AW \cdot B^{15}$ berechnet werden. Nach Ausführung der nichtlinearen Kompression, 13, erfolgt eine Abspeicherung der Spektren 14, vorzugsweise in einem RAM.

Wie bereits erwähnt im Zusammenhang mit der Parameternachführung des Basiswertes ist es vorteilhaft das Ergebnis der Fouriertransformation auf den Basiswert der Schwelle zurückzukoppeln um eine optimale Synchronisation der Ansprechschwelle zwischen dem Ruhedetektor und der Fouriertransformation zu erreichen. Diese Parameternachführung, 15, folgt nach Speichern der Spektren im RAM. Nach Durchführung der Parameternachführung wird die Spannungsversorgung des Sensors für diesen Zyklus abgeschaltet, 16.

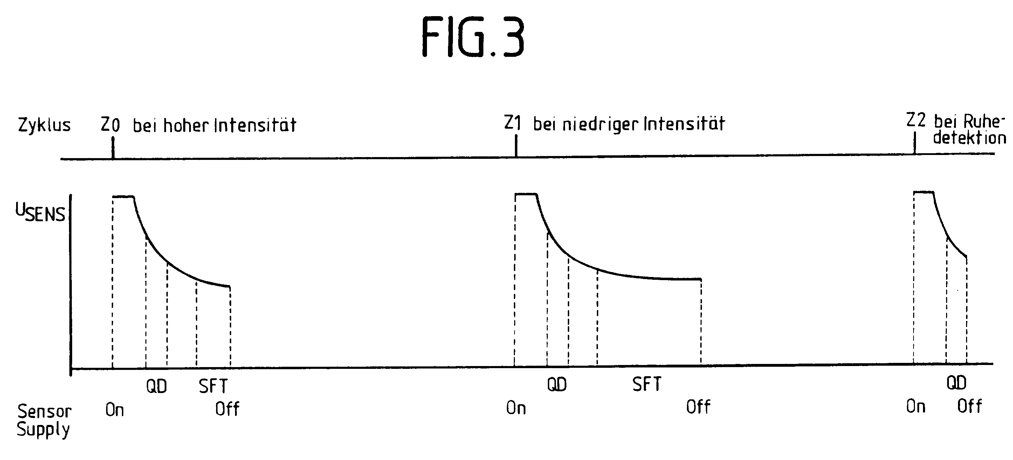

In Fig. 3 sind drei verschiedene Sensorzyklen dargestellt, und zwar ein Zyklus mit hoher Intensität, ein Zyklus mit niedriger Intensität und ein Zyklus mit Ruhedetektion QD. Erkennbar ist, daß bei hoher Intensität sowohl die Ruhedetektion als auch die Fouriertransformation im Einschwingbereich des Sensors bzw. der Sensorspannung $U_{sens}$ erfolgen. Bei niedriger Intensität, bei der über eine größere Anzahl von Meßwerten integriert wird, erfolgt die Fouriertransformation in hinteren Teilen der Einschwingkurve. Bei erfolgter Ruhedetektion dagegen wird die Sensorspannung bereits unmittelbar nach Abschluß von QD abgeschaltet.

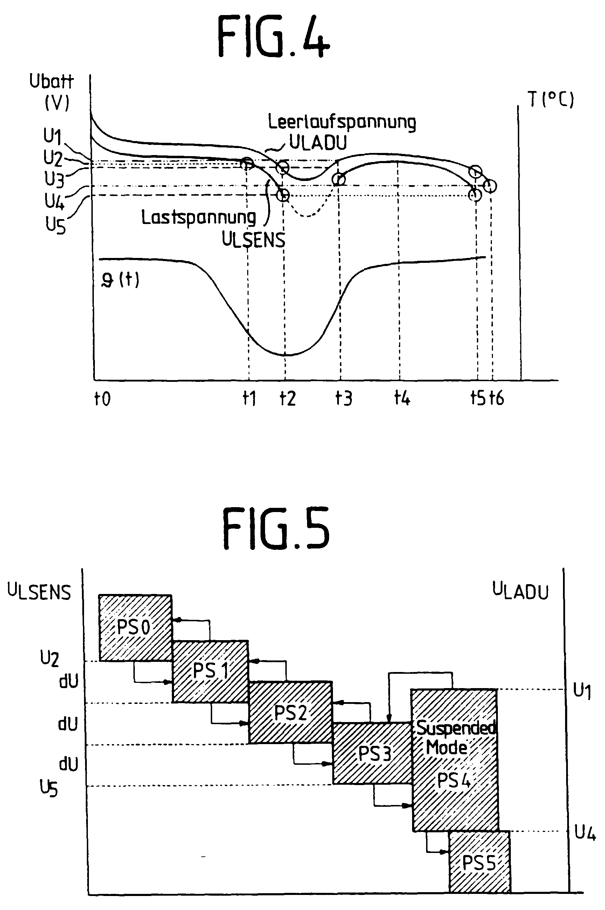

In Fig. 4 sind die Leerlaufspannung der zur Spannungsversorgung bei einer in erfindungsgemäßer Vorrichtung verwendeten Batterie und die Batteriespannung unter der Last des Sensors $U_{lsens}$ bei sich ändernden Temperatur in Abhängigkeit von der Zeit T dargestellt. Um einer verminderten Batteriekapazität Rechnung zu tragen, ist es vorteilhaft, die Leistungsaufnahme der Vorrichtung der momentan verfügbaren Kapazität bzw. den gemessenen Spannungen anzupassen. Vorteilhaft wird dies dadurch erreicht, daß die Anzahl der Spektren, über die summiert wird, oder die Zykluszeiten bzw. die Anzahl der ausgewerteten Meßwerte oder beide der Batteriekapazität angepaßt werden.

In der folgenden Tabelle ist eine bevorzugte temperaturabhängige Leistungsanpassung dargestellt.

| Power State (PS) | Characteristics | Cycle [s] | Max. Integration |
|---|---|---|---|
| 0 | Normal Operation | 60 | 80 |
| 1 | Reduced Power Operation 1 | 60 | 20 |
| 2 | Reduced Power Operation 2 | 4 * 60 | 20 |
| 3 | Reduced Power Operation 3 | 16 * 60 | 20 |
| 4 | Suspended Power Operation | 16 * 60 | Sensor off |
| 5 | Ultimate Sleep Mode | off | Sensor off |

Den verschiedenen Spannungen entsprechen verschiedene Power-States PS mit unterschiedlicher Zyklus-länge und Anzahl von Spektren, über die integriert wird. Im Prinzip wird bei der temperaturgesteuerten Leistungsanpassung die Leistungsaufnahme reduziert, wenn die Spannung $U_{LSENS}$ die Grenzspannung U2 unterschreitet.

In Fig. 4 ist zunächst die gemessene Lastspannung $U_{LSENS}$ größer als $U_2$, die Vorrichtung befindet sich in PS 0 Normalzustand. Der momentane Energieverbrauch wird durch die aktuelle Bewegungsintensität bestimmt. Die Zykluszeit beträgt stets 60 Sekunden; in Ruhezeiten ist die Vorrichtung im Ruhezustand, in Bewegung wird vorzugsweise ein Gesamtspektrum aus 20, 40 oder 80 Spektren in Abhängigkeit von der Bewegungsintensität berechnet.

Sinkt $U_{LSENS}$ unter $U_2$, dann geht die Vorrichtung in PS 1 über, bei dem die Leistungsaufnahme reduziert ist. Das System bleibt so lange in PS 1, wie die gemessene Spannung $U_{LSENS}$ nicht kleiner als U2 - dU und nicht größer als U2 + H wird. Der Parameter H wird beim Übergang von PS1 zu PS0 als Hysterese verhindern, daß das System: zu schwingen beginnt.

Allgemein gelten für die Zustandsübergänge folgende Relationen:

$$\text{Übergang nach PS(i+l), wenn } U_L < U_2 - i\,dU$$

$$\text{Übergang nach PS(i-l), wenn } U_L > U_2 - (i-l)dU + H$$

Unterschreitet die aktuelle Lastspannung $U_{LSENS}$ den Grenzwert U5, mit U5 = U2 - N • du , dann erfolgt ein Übergang zum sogenannten Suspended Mode (PS4), Zeitpunkt t2. Im Suspended Mode werden keine Sensoraktivitäten mehr ausgeführt und die verbleibende Batteriekapazität ist für die Erhaltung der Daten reseviert.

Im Suspended Mode wird im vielfachen der gewöhnlichen Zykluszeit eine Messung der Batteriespannung $U_{LADU}$ durchgeführt, d. h. nicht unter Sensorlast. Dies führt dazu, daß $U_{LADU}$ größer als $U_{LSENS}$ ist; vgl. Fig. 4 bei Zeitpunkt t2. Mit dem Übergang zum Suspended Mode kann sich die Batterie in gewissen Grenzen regenerieren, da sie in diesem Fall nur noch eine geringe Last zu treiben hat. Dies kann zu einem Anstieg der Leerlaufspannung führen, ohne daß damit ein realer Anstieg der Batteriekapazität verbunden ist. Aus diesem Grund wird der Übergang vom Suspended Mode in den Mode PS 3 erst dann ausgeführt, wenn die gemessene $U_{LADU}$ um mindestens $dU_{ADU}$ = U1-U3 gestiegen ist. Dieser Fall ist in Fig. 4 zum Zeitpunkt T3 dargestellt. Die Größe DOADU sollte als Parameter ausgeführt werden.

Am Ende der Batterielebensdauer kann die Belastung bei der Spannungsmessung zum Zusammenbruch der Batteriespannung und damit zu einer Gefährdung der Datenhaltung führen. Daher findet in dem Fall, daß die gemessene Batteriespannung im Suspended Mode unter einem bestimmten Schwellwert U4 sinkt, ein Übergang in einen irreversiblen Sleep Mode PS5 statt. Dieser Sleep Mode hat keinen Übergang zu einem anderen Power State, ebensowenig wird die Zeit registriert.

Fig. 5 zeigt eine grafische Auftragung der Zustandsübergänge bei automatisch angepasster Leistungsaufnahme der erfindungsgemäßen Vorrichtung.

**Patentansprüche**

1. Verfahren zur Überwachung der Laufzeit von Transportgütern, bei dem von einer Überwachungseinrichtung mit einem Beschleunigungssensor die Bewegung einer Sendung registriert wird, dessen Meßwerte gespeichert und einer Auswerteeinrichtung zugeführt werden, dadurch gekennzeichnet, daß in einer jeweils vorgegebenen Zyklusdauer T zu einer vorgegebenen Anzahl von jeweils N Meßwerten eine vorgegebene Anzahl von K Frequenzspektren, bestehend aus einer vorgegebenen Anzahl von M Spektrallinien ermittelt wird daß eine Integration der K Frequenzspektren erfolgt, so daß am Ende jeder Zyklusdauer T genau M integrierte Spektrallinien vorliegen, und daß die integrierten Spektrallinien in einem Speicher abgelegt werden, wobei die Meßwerte über die gesamte Laufzeit eines Transportgutes in dem Speicher abgelegt werden und am Transportziel eine Auswertung zur Rekonstruktion des Transportverlaufs zugeführt werden.

2. Verfahren zur Überwachung der Laufzeit von Transportgütern, bei dem von einer Überwachungseinrichtung mit einem Beschleunigungssensor die Bewegung einer Sendung registriert wird, dessen Meßwerte gespeichert und einer Auswerteeinrichtung zugeführt werden, dadurch gekennzeichnet, daß in einer jeweils vorgegebenen Zyklusdauer T die Meßwerte digitalisiert und eine vorgegebene Anzahl von K Frequenzspektren, bestehend aus einer vorgegebenen Anzahl von M Spektrallinien aus einer vorgegebenen Anzahl von jeweils N Meßwerten berechnet werden, daß eine Integration der K Frequenzspektren erfolgt, so daß am Ende jeder Zyklusdauer T genau M integrierte Spektrallinien vorliegen, und daß die integrierten Spektrallinien in einem Speicher abgelegt werden, wobei die Meßwerte über die gesamte Laufzeit eines Transportguts in dem Speicher abgelegt werden und am Transportziel einer Auswertung zur Rekonstruktion des Transportverlaufes zugeführt werden.

3. Verfahren nach Anspruch 1, dadurch gekennzeichnet, daß die Ermittlung der Frequenzspektren mit einem oder mehreren Bandpaßfiltern erfolgt.

4. Verfahren nach einem der Ansprüche 1 bis 3, dadurch gekennzeichnet, daß eine Detektion der Bewegungsenergie der Sendung erfolgt, und daß die Ermittlung eines Frequenzspektrums nur erfolgt, wenn die Bewegungsenergie größer als eine vorgegebene minimale Bewegungsenergie $S_m$ ist.

5. Verfahren nach einem der Ansprüche 1 bis 4, dadurch gekennzeichnet, daß als Maß für die Bewegungsenergie die Summe der Beträge der Abstände von benachbarten Meßwerten oder die Streuung benachbarter Meßwerte in einem vorgegebenen Meßintervall verwendet wird.

6. Verfahren nach Anspruch 4 oder 5, dadurch gekennzeichnet, daß die Anzahl K der Frequenzspektren, über die integriert wird, mit zunehmender Bewegungsenergie vermindert wird.

7. Verfahren nach einem der Ansprüche 1 bis 6, dadurch gekennzeichnet, daß eine nichtlineare Kompression der integrierten Spektrallinien vor ihrer Ablage in den Speicher erfolgt.

8. Verfahren nach einem der Ansprüche 4 bis 6, dadurch gekennnzeichnet, daß eine Adaption des Wertes der minimalen Bewegungsenergie $S_m$ derart erfolgt, daß $S_m = S_{base} + S_{par}$ gesetzt wird, wobei Spar ein konstanter Anteil ist, der die Empfindlichkeit der Bewegungsdetektion festlegt und $S_{base}$ nach jeder Berechnung von S gemäß $S_{base} = Min(S_{base}, S)$ neu berechnet wird.

9. Verfahren nach einem der Ansprüche 1 bis 8, dadurch gekennzeichnet, daß die Anzahl der Frequenzspektren, über die integriert wird, und/oder die Zyklusdauer T in Abhängigkeit von der unter der Last des Bewegungssensors gemessenen Versorgungsspannung der Testeinrichtung variiert wird.

10. Verfahren nach Anspruch 9, dadurch gekennzeichnet, daß bei Unterschreiten eines vorgegebenen Wertes $U_5$ der Versorgungsspannung der Bewegunggssensor deaktiviert wird, daß eine Messung der Batteriespannung $U_{LADU}$ ohne Sensorlast erfolgt, und der Bewegungssensor erst, wenn $U_{LADU}$ einen vorgegebenen Wert uberschreitet, wieder aktiviert wird.

11. Verfahren nach Anspruch 10, dadurch gekennzeichent, daß, wenn die gemessene Batteriespannung unter einen

7

vorgegebenen Wert $U_4$ sinkt, ein Übergang in einen irreversiblen Sleep Modus erfolgt.

**12.** Verfahren nach einem der vorhergehenden Ansprüche, dadurch gekennzeichnet, daß K = 20 oder 40 oder 80 gesetzt wird.

**13.** Verfahren nach einem der vorhergehenden Ansprüche, dadurch gekennzeichnet, daß Spektren von Frequenzen von 8 ,16, 24 und 32 Hertz verwendet werden.

**14.** Vorrichtung zur Durchführung eines Verfahrens zur Überwachung der Laufzeit von Transportgütern, bei dem von einer Überwachungseinrichtung mit einem Beschleunigungssensor die Bewegung einer Sendung registriert wird, dessen Meßwerte gespeichert und einer Auswerteeinrichtung zugeführt werden, dadurch gekennzeichnet, daß in der Auswerteeinrichtung in einer jeweils vorgegebenen Zyklusdauer T die Meßwerte digitalisiert werden und eine vorgegebene Anzahl von K Frequenzspektren aus einer vorgegebenen Anzahl von jeweils N Meßwerten berechnet werden, wobei jedes Frequenzspektrum aus einer vorgegebenen Anzahl von M Spektrallinien besteht, daß eine Integration der K Frequenzspektren erfolgt, die jeweils zu einem integrierten Spektrum mit M Spektrallinien führt und daß die integrierten Spektrallinien in einem Speicher abgelegt werden, wobei die Auswerteeinrichtung eine Einrichtung zur Ermittlung und Speicherung der integrierten Spektrallinien der Meßwerte des Bewegungssensors aufweist.

**15.** Vorrichtung nach Anspruch 14, dadurch gekennzeichnet, daß die Auswerteeinrichtung eine Einrichtung zur Komprimierung der integrierten Spektrallinien vor ihrer Speicherung aufweist.

**16.** Vorrichtung nach Ansprüchen 14 oder 15, dadurch gekennzeichnet, daß durch die Auswerteeinrichtung eine Detektion von Ruhezuständen oder Bewegungszuständen vorgegebener Bewegungsenergie erfolgt.

**17.** Vorrichtung nach einem der Ansprüche 15 oder 16, dadurch gekennzeichnet, daß die Auswerteeinrichtung eine Einrichtung zur batterie-kapazitätsabhängigen Leistungsaufnahmeadaption aufweist, bei der die Anzahl K der Frequenzspektren, über die integriert wird, und/oder die Anzahl der ausgewerteten Meßwerte variiert wird.

**Claims**

**1.** Method for monitoring the transit time of transported articles, in which the movement of a despatch is recorded by a monitoring device using an acceleration sensor, whose measurements are stored and are supplied to an evaluation device, characterized in that a predetermined number K of frequency spectra, comprising a predetermined number M of spectral lines is determined in each predetermined cycle period T for a predetermined number of in each case N measurements, in that the K frequency spectra are integrated so that M, and only M, integrated spectral lines are present at the end of each cycle period T, and in that the integrated spectral lines are stored in a memory, with the measurements being stored in the memory throughout the entire transit time of a transported article, and an evaluation for reconstruction of the transport profile being supplied at the transport destination.

**2.** Method for monitoring the transit time of transported articles, in which the movement of a despatch is recorded by a monitoring device using an acceleration sensor, whose measurements are stored and are supplied to an evaluation device, characterized in that the measurements are digitized in a respective predetermined cycle period T, and a predetermined number K of frequency spectra, comprising a predetermined number M of spectral lines, are calculated from a predetermined number of in each case N measurements, in that the K frequency spectra are integrated so that M, and only M, integrated spectral lines are present at the end of each cycle period T, and in that the integrated spectral lines are stored in a memory, with the measurements being stored in the memory throughout the entire transit time of a transported article, and an evaluation for reconstruction of the transport profile being supplied at the transport destination.

**3.** Method according to Claim 1, characterized in that the frequency spectra are determined using one or more bandpass filters.

**4.** Method according to one of Claims 1 to 3, characterized in that the movement energy of the despatch is detected, and in that a frequency spectrum is determined only if the movement energy is greater than a predetermined minimum movement energy $S_m$.

**5.** Method according to one of Claims 1 to 4, characterized in that the sum of the magnitudes of the intervals between adjacent measurements or the scatter between adjacent measurements in a predetermined measurement interval is used as a measure for the movement energy.

6. Method according to Claim 4 or 5, characterized in that the number K of frequency spectra over which the integration is carried out is reduced as the movement energy increases.

7. Method according to one of Claims 1 to 6, characterized in that nonlinear compression of the integrated spectral lines is carried out before they are stored in the memory.

8. Method according to one of Claims 4 to 6, characterized in that the value of the minimum movement energy $S_m$ is adapted in such a way that $S_m = S_{base} + S_{par}$, where $S_{par}$ is a constant element which defines the sensitivity of the movement detection, and $S_{base}$ is recalculated after each calculation of S, using $S_{base} = Min(S_{base}, S)$.

9. Method according to one of Claims 1 to 8, characterized in that the number of frequency spectra over which the integration is carried out, and/or the cycle period T, are/is varied as a function of the supply voltage of the test device, measured when the movement sensor is loaded.

10. Method according to Claim 9, characterized in that the movement sensor is deactivated if the supply voltage falls below a predetermined value $U_5$, in that the battery voltage $U_{LADU}$ is measured without any sensor load, and the movement sensor is not reactivated until $U_{LADU}$ exceeds a predetermined value.

11. Method according to Claim 10, characterized in that, if the measured battery voltage falls below a predetermined value $U_4$, a change is made to irreversible sleep mode.

12. Method according to one of the preceding claims, characterized in that K is set to be equal to 20, 40 or 80.

13. Method according to one of the preceding claims, characterized in that frequency spectra of 8, 16, 24 and 32 Hertz are used.

14. Apparatus for carrying out a method for monitoring the transit time of transported articles, in which the movement of a despatch is recorded by a monitoring device using an acceleration sensor, whose measurements are stored and are supplied to an evaluation device, characterized in that the measurements in a respective predetermined cycle period T are digitized in the evaluation device and a predetermined number of K frequency spectra are calculated from a predetermined number of in each case N measurements, with each frequency spectrum comprising a predetermined number of M spectral lines, in that the K frequency spectra are integrated, which integration process in each case leads to an integrated spectrum having M spectral lines, and in that the integrated spectral lines are stored in a memory, with the evaluation device having a device for determining and storing the integrated spectral lines of the measurements from the movement sensor.

15. Apparatus according to Claim 14, characterized in that the evaluation device has a device for compressing the integrated spectral lines before they are stored.

16. Apparatus according to Claims 14 or 15, characterized in that the evaluation device detects rest states or movement states having a predetermined movement energy.

17. Apparatus according to one of Claims 15 or 16, characterized in that the evaluation device has a device for power-consumption adaptation as a function of the battery capacity, in which the number K of frequency spectra over which the integration process is carried out and/or the number of evaluated measurements are/is varied.

**Revendications**

1. Procédé de surveillance de la durée de parcours d'articles transportés, dans lequel le déplacement d'un envoi est enregistré par un dispositif de surveillance comportant un capteur d'accélération dont les valeurs de mesure sont mémorisées et envoyées à un dispositif d'exploitation, caractérisé en ce qu'il est déterminé durant une durée T de cycle prescrite, par rapport à un nombre prescrit de chaque fois N valeurs de mesure, un nombre prescrit de K spectres de fréquence constitués d'un nombre prescrit de M raies spectrales, en ce qu'il est effectué une intégration des K spectres de fréquence, si bien que, à la fin de chaque durée T de cycle, il est présent exactement M raies spectrales intégrées, et en ce que les raies spectrales intégrées sont mises en mémoire dans une mémoire, les valeurs de mesure sur toute la durée de parcours d'un article transporté étant mises en mémoire dans la mémoire et envoyées à un dispositif d'exploitation se trouvant chez le destinataire du transport pour reconstruire le déroulement du transport.

2. Procédé de surveillance de la durée de parcours d'articles transportés, dans lequel le déplacement d'un envoi est enregistré par un dispositif de surveillance comportant un capteur d'accélération dont les valeurs de mesure sont mémorisées et envoyées à un dispositif d'exploitation, caractérisé en ce que, pendant chaque fois une durée T de cycle prescrite, les valeurs de mesure sont numérisées et un nombre prescrit de K spectres de fréquence, constitué d'un nombre prescrit de M raies spectrales, est calculé à partir d'un nombre prescrit de chaque fois N valeurs de mesure, en ce que l'on effectue une intégration des K spectres de fréquence, si bien que, à la fin de chaque durée T de cycle, il est présent exactement M raies spectrales intégrées, et en ce que les raies spectrales intégrées sont mises en mémoire dans une mémoire, les valeurs de mesure sur toute la durée de parcours d'un produit transporté étant mémorisées dans la mémoire et étant envoyées au destinataire de transport à un dispositif d'exploitation pour reconstruire le déroulement du transport.

3. Procédé suivant la revendication 1, caractérisé en ce que la détermination des spectres de fréquence s'effectue par un ou plusieurs filtres passe-bande.

4. Procédé suivant l'une des revendications 1 à 3, caractérisé en ce que l'on effectue une détection de l'énergie de déplacement de l'envoi et en ce que la détermination d'un spectre de fréquence ne s'effectue que si l'énergie de déplacement est supérieure à une énergie $S_m$ de déplacement minimal prescrite.

5. Procédé suivant l'une des revendications 1 à 4, caractérisé en ce que l'on utilise comme mesure de l'énergie de déplacement la somme des valeurs des écarts de valeurs de mesure voisines ou la dispersion de valeurs de mesure voisines dans un intervalle de mesure prescrit.

6. Procédé suivant la revendication 4 ou 5, caractérisé en ce que le nombre K des spectres de fréquence sur lequel on effectue l'intégration est diminué à mesure que l'énergie de déplacement augmente.

7. Procédé suivant l'une des revendications 1 à 6, caractérisé en ce que l'on effectue une compression non linéaire des raies spectrales intégrées avant leur mémorisation dans la mémoire.

8. Procédé suivant l'une des revendications 4 à 6, caractérisé en ce que l'on effectue une adaptation de la valeur de l'énergie $S_m$ de déplacement minimal de manière à établir $S_m = S_{base} + S_{par}$, $S_{par}$ étant une composante constante qui fixe la sensibilité de la détection de déplacement et $S_{base}$ étant calculé à nouveau suivant $S_{base} = Min(S_{base}, S)$ après chaque calcul de S.

9. Procédé suivant l'une des revendications 1 à 8, caractérisé en ce que l'on fait varier le nombre des spectres de fréquence sur lequel on effectue l'intégration et/ou la durée T de cycle en fonction de la tension d'alimentation du dispositif de test mesurée à la charge du capteur de déplacement.

10. Procédé suivant la revendication 9, caractérisé en ce que, dans le cas où l'on est au-dessous d'une valeur $U_5$ prescrite de la tension d'alimentation, le capteur de déplacement est désactivé, en ce que l'on effectue une mesure de la tension $U_{LADU}$ de la batterie sans charge du capteur, et que le capteur de déplacement n'est réactivé que si $U_{LADU}$ est supérieur à une valeur prescrite.

11. Procédé suivant la revendication 10, caractérisé en ce qu'une transition à un Sleep Mode irréversible est effectuée si la tension de la batterie mesurée s'abaisse au-dessous d'une valeur $U_4$ prescrite.

12. Procédé suivant l'une des revendications précédentes, caractérisé en ce que K = 20 ou 40 ou 80 est établi.

13. Procédé suivant l'une des revendications précédentes, caractérisé en ce que l'on utilise des spectres de fréquence de 8, 16, 24 et 32 Hz.

14. Dispositif pour mettre en oeuvre un procédé de surveillance de la durée de parcours d'articles transportés, dans lequel le déplacement d'un envoi est enregistré par un dispositif de surveillance par un capteur d'accélération dont les valeurs de mesure sont mémorisées et envoyées à un dispositif d'exploitation, caractérisé en ce que, dans le dispositif d'exploitation, pendant chaque fois une durée T de cycle prescrite, les valeurs de mesure sont numérisées et un nombre prescrit de K spectres de fréquence est calculé à partir d'un nombre prescrit de chaque fois N valeurs de mesure, chaque spectre de fréquence consistant en un nombre prescrit de M raies spectrales, en ce qu'il est effectué une intégration des K spectres de fréquence qui conduit chaque fois à un spectre intégré à M raies spectrales et en ce que les raies spectrales intégrées sont mémorisées dans une mémoire, le dispositif d'exploitation comportant un dispositif pour déterminer et mémoriser les raies spectrales intégrées des valeurs de mesure du capteur de déplacement.

15. Dispositif suivant la revendication 14, caractérisé en ce que le dispositif d'exploitation comporte un dispositif pour comprimer avant leur mémorisation les raies spectrales intégrées.

16. Dispositif suivant les revendications 14 ou 15, caractérisé en ce qu'il s'effectue par le dispositif d'exploitation une détection d'état de repos ou d'état de déplacement d'énergie de déplacement prescrite.

17. Dispositif suivant l'une des revendications 15 ou 16, caractérisé en ce que le dispositif d'exploitation comporte un dispositif pour adapter la consommation de puissance en fonction de la capacité de la batterie, dans lequel on fait varier le nombre K des spectres de fréquence sur lequel on effectue l'intégration et/ou le nombre des valeurs de mesure exploitées.

# FIG.1

**A** — Intensität / Zeit (h) — Briefkastenleerung
14:00 14:10 14:20 14:30 14:40 14:50

**B** — Intensität / Zeit (h) — Straßentransport
23:30 0:00 0:30 1:00 1:30 2:00 2:30

**C** — Intensität / Zeit (h) — Flugtransport
18:45 19:00 19:15 19:30 19:45 20:00 20:15

**D** — Intensität / Zeit (h) — Zustellung
9:30 9:45 10:00 10:15 10:30 10:45 11:00 11:15

# FIG.2

Zyklusbeginn

Ruhedetektion (QD)

Ruhe

**Nicht Ruhe** — 10

| Intensität | | |
|---|---|---|
| klein k=80 | mittel k=40 | groß k=20 |

QTL-Spektral-analyse (SFT)

Integration über k SFT-Spektren — 11

Integrales Spektrum (Beträge) — 12

Nichtlineare Kompression — 13

Speichern im RAM — 14

Parameternachführung der Ruhedetektion — 15

Sensorversorgungs-spannung off — 16

---

QTL-Ruhedetektion (QD)

Sensorversorgungsspannung on — 1

Warten auf das Erreichen eines bestimmten Anfangsspannungs-wertes — 2

Summation über die Abstände von N Abtastwerten
$S = \Sigma |y_i - y_{i+1}|$ — 3

Parameternachführung des Basiswertes
$S_{base} = min(S_{base}, S)$ — 4

Test auf Ruhe
$S < S_{base} - S_{par}$ — 5

j — Ruhe

n — Test auf mittlere Intensität $S > S_{medi}$

n — Niedrige Intensität

j — Test auf hohe Intensität $S > S_{high}$

Sensorversorgungs-spannung off

n — Mittlere Intensität

j — Hohe Intensität

EP 0 744 030 B1

# FIG.3

Zyklus    Z0 bei hoher Intensität        Z1 bei niedriger Intensität        Z2 bei Ruhe-detektion

$U_{SENS}$

QD    SFT             QD    SFT            QD

Sensor Supply    On      Off          On        Off        On    Off

EP 0 744 030 B1

# FIG.4

# FIG.5